**Europäisches Patentamt**

**European Patent Office**

**Office européen des brevets**

(19)

(11) Numéro de publication: **0 072 283**
**B1**

(12) **FASCICULE DE BREVET EUROPEEN**

(45) Date de publication du fascicule du brevet:
08.01.86

(51) Int. Cl.⁴: **H 02 K 23/30, H 02 K 5/14**

(21) Numéro de dépôt: **82401377.5**

(22) Date de dépôt: **23.07.82**

(54) Moteur électrique, notamment pour l'entraînement d'une pompe hydraulique à engrenages.

| | |
|---|---|
| (30) Priorité: **30.07.81 FR 8114844** | (73) Titulaire: **ACIERS ET OUTILLAGE PEUGEOT Société dite:, F-25400 Audincourt (Doubs) (FR)** |
| (43) Date de publication de la demande: **16.02.83 Bulletin 83/7** | (72) Inventeur: **Bertot, Maurice, 69 bis Rue de Belfort, F-25200 Montbéliard (FR)**<br>Inventeur: **Lemonnier, François, 7 Impasse du Midi, F-25700 Valentigney (FR)**<br>Inventeur: **Graf, Michel, 1 Rue Oehmichen, F-25700 Valentigney (FR)** |
| (45) Mention de la délivrance du brevet: **08.01.86 Bulletin 86/2** | |
| (84) Etats contractants désignés: **DE GB IT** | (74) Mandataire: **Bressand, Georges et al, c/o CABINET LAVOIX 2 Place d'Estienne d'Orves, F-75441 Paris Cedex 09 (FR)** |
| (56) Documents cités:<br>**DE - C - 34 783**<br>**DE - C - 886 628**<br>**FR - A - 403 519**<br>**FR - A - 1 601 429**<br>**GB - A - 368 334**<br>**GB - A - 426 340**<br>**GB - A - 1 013 508**<br>**US - A - 2 463 097**<br>**US - A - 4 230 962**<br><br>**FEINWERKTECHNIK & MESSTECHNIK, vol. 86, no. 4, mai/juin 1978, pages 161-167, Munich (DE); A. KOHLER et al.: "Industrielle Anwendung von Kraftfahrzeug-Scheibenwischermotoren".** | |

ACTORUM AG

## Description

La présente invention est relative aux moteurs électriques à courant continu de faible puissance dont l'alimentation est assurée à basse tension et dont l'inducteur est réalisé par l'intermédiaire d'aimants permanents. Plus particulièrement, l'invention concerne un tel moteur électrique destiné à être utilisé dans un véhicule automobile pour entraîner certains accessoires tels que le dispositif d'assistance de direction, par exemple.

D'une façon générale, tout moteur électrique de ce type à inducteur à aimants voit son couple modulé autour d'une valeur moyenne à une fréquence dépendant du nombre d'encoches et de lames de son collecteur. Si un tel moteur est accouplé à une pompe hydraulique à engrenages par exemple, cette modulation de couple génère elle-même une modulation de la pression d'huile de la pompe dont la fréquence est liée au nombre de dents des engrenages et à la vitesse de rotation. De ce fait, l'ensemble moteur-pompe est un excitateur du circuit d'huile et peut entraîner des bruits hydrauliques désagréables.

Comme dans tout système excité, on a intérêt à réduire l'énergie de l'excitateur si l'on veut limiter les bruits, on est donc amené à adapter la conception du moteur d'entraînement pour réduire les variations de couple engendrées. Par ailleurs, s'il s'agit de l'application aux véhicules automobiles, il convient de respecter des conditions de coût de fabrication compatibles avec un organe destiné à être monté sur un tel véhicule.

Le couple d'un moteur électrique est proportionnel au produit: $0 \times I$ dans lequel $0$ est le flux inducteur et $I$ le courant dans les conducteurs du bobinage.

Du fait des fortes intensités découlant de la basse tension d'alimentation continue (12 V) habituelle dans les véhicules automobiles et qui conduit à utiliser de gros conducteurs pour le bobinage, le nombre d'encoches est limité pour assurer le nombre voulu de spires et pour diminuer le temps de bobinage donc le coût de fabrication.

Dans ces conditions, les deux facteurs $0$ et $I$ subissent une modulation importante en pourcentage répercutée en produit sur le couple.

On considère d'abord un moteur classique à deux pôles.

Le flux $0$ généré par un aimant permanent est modulé:
- par la variation de réluctance du circuit magnétique elle-même dépendant du nombre d'encoches en présence sous l'aimant, nombre variant avec la position angulaire de l'induit,
- l'effet de cette variation de réluctance est amplifié par l'aimant lui-même dont le point de fonctionnement est fonction de la réluctance du circuit.

L'intensité $I$ du courant est modulée par la variation de résistance du bobinage, vue des balais qui viennent court-circuiter une section de bobinage chaque fois que l'un d'eux couvre deux lames du collecteur.

La combinaison des deux variations conduit finalement à une modulation importante du couple.

D'après le document GB-A-368 334, on connaît déjà un moteur électrique présentant un rotor ayant un nombre d'encoches important associé à un collecteur avec des lames dont le nombre est encore plus important, par exemple le double du nombre d'encoches du rotor. Dans ce brevet, on utilise un bobinage divisé classique. Cette construction permet d'obtenir une commutation très satisfaisante et une réduction des courants de court-circuit circulant dans les bobines aux moments où elles sont commutées.

Il faut observer que cet agencement connu de machine électrique conduit non seulement à une amélioration de la commutation mais également à une réduction des oscillations du rotor, c'est-à-dire à une réduction des variations du couple fourni grâce précisément aux nombres élevés d'encoches et de lames de collecteur.

On sait que du point de vue électrique, les bobinages divisés confèrent aux machines électriques des propriétés de rendement, de commutation et d'échauffement très satisfaisantes, mais ce mode de bobinage nécessite pour la mise en place dans le rotor plusieurs passes de bobinage par encoche. Or, cette opération n'est pas envisageable sur des machines automatiques que l'on utilise dans le domaine automobile, où, pour réduire le prix de revient, les séries de petits moteurs électriques à fabriquer sont toujours très importantes. La mise en place d'un bobinage divisé est donc coûteuse et incompatible avec les exigences de faible coût prévalant dans l'industrie automobile.

A cela s'ajoute que, du fait de la finesse des lames du collecteur, les bobines ne peuvent être connectées par le technique dite «des crochets» dans laquelle chaque lame, côté induit, est pourvue d'un organe en forme de crochet sur lequel la tête de bobine (à deux fils) peut facilement être accrochée et soudée. Cette technique très avantageuse qui est usuelle dans la fabrication de petits moteurs électriques dont il s'agit ici ne peut être appliquée aux machines du genre du brevet anglais, car du fait de la finesse des lames, il n'y a pas assez de place entre deux lames adjacentes, d'une part, pour passer la boucle de la tête de bobine sur le crochet et, d'autre part, pour qu'un outil de soudage puisse passer entre les lames.

Dans la revue allemande «Feinwerktechnik und Messtechnik», volume 86 n° 4 mai-juin 1978, A. Kohler et al. fournissent des indications générales sur la construction des moteurs électriques utilisés dans le domaine des véhicules automobiles et notamment sur la fabrication en série de ce type de moteurs électriques. Un schéma de bobinage de cet article (Fig. 8) montre que le rotor peut comporter un nombre d'encoches tel que soit satisfaite la relation:

$$N = \frac{1}{2} S (2n + 1)$$

dans laquelle
  $N$ = nombre d'encoches,
  $S$ = nombre de pôles.
  $n$ = nombre entier quelconque.

Le moteur connu comporte des balais de type classique, dont la largeur est très faible par rapport à la dimension angulaire des lamelles du collecteur.

Or, la demanderesse a constaté que si ce moteur permet d'améliorer les performances de faible bruit et de réduire notamment les irrégularités, le moteur peut davantages être perfectionné tout en conservant les autres propriétés favorables du moteur décrit dans ce document antérieur à savoir la facilité de construction et la simplicité.

L'invention a donc pour but de créer un moteur électrique du type générale indiqué ci-dessus dont la régularité de rotation soit aussi grande que possible.

Elle a donc pour objet un moteur électrique à courant continu et à basse tension destiné notamment à entraîner des accessoires d'un véhicule automobile tels que la pompe hydraulique du dispositif de direction assistée, ce moteur comportant au moins deux pôles définis par un stator à aimants permanents, ainsi qu'un rotor à empilage de tôles muni d'encoches dans lesquelles sont disposés des bobinages rotoriques à enroulement parallèle qui sont connectés respectivement aux lames du collecteur du rotor, le nombre d'encoches du rotor étant égal au nombre de lames du collecteur et satisfaisant la relation $N = 1/2\, S\, (2n + 1)$ dans laquelle: $N$ = nombre d'encoches, $S$ = nombre de pôles, $n$ = nombre entier quelconque, la largeur angulaire $1_1$ d'une lame du collecteur étant supérieure ou égale à la largeur angulaire $1_b$ d'un balai, la largeur $1_1$ d'une lame de collecteur et la largeur $1_b$ des balais étant en outre liées par la relation $1_1/2 < 1_b$, cette relation assurant que deux balais destinés à être branchés respectivement sur les bornes opposées d'une source de tension étant initialement placés de façon que lorsque l'un des balais est sur une lame, l'autre balai chevauche deux lames consécutives, cette position relative des balais et des lames de collecteur étant toujours conservée au cours de la rotation du moteur, les balais sont montés sur une pièce unique de montage réalisée en matière isolante et solidaire du flasque du moteur côté collecteur, et cette pièce de montage est agencée également pour supporter des moyens de connexion électrique de ces balais à une source de courant extérieure.

Grâce à ces caractéristiques, les phénomènes générateurs de la modulation du couple du moteur sont déphasés dans le temps, ce qui non seulement réduit l'amplitude de la modulation, mais encore en augmente la fréquence, de sorte que part l'effet d'inertie, cette modulation est nettement moins répercutée sur l'arbre de sortie du moteur que dans les moteurs classiques.

Ce résultat est obtenu moyennant une construction simple du motor permettant l'usage d'outillages de bobinage simples contrairement à ce qui est possible lorsque l'on tente de répartir la modulation par vrillage hélicoïdal des encoches du rotor ou en en augmentant le nombre d'encoches.

L'invention sera mieux comprise à l'aide de la description qui va suivre, donnée uniquement à titre d'exemple et faite en se référant aux dessins annexés, sur lesquels:
- la fig. 1 est une vue en coupe axiale d'un groupe moto-pompe, notamment pour dispositif d'assistance de direction d'un véhicule, dont le moteur électrique est conçu selon les caractéristiques de la présente invention;
- la fig. 2 montre un schéma de bobinage du moteur représenté sur la fig. 1;
- la fig. 3 est une vue en bout du moteur montrant en pointillés l'agencement des balais coopérant avec le collecteur:
- la figure 4 est une vue en coupe prise selon la ligne 4–4 de la figure 3.

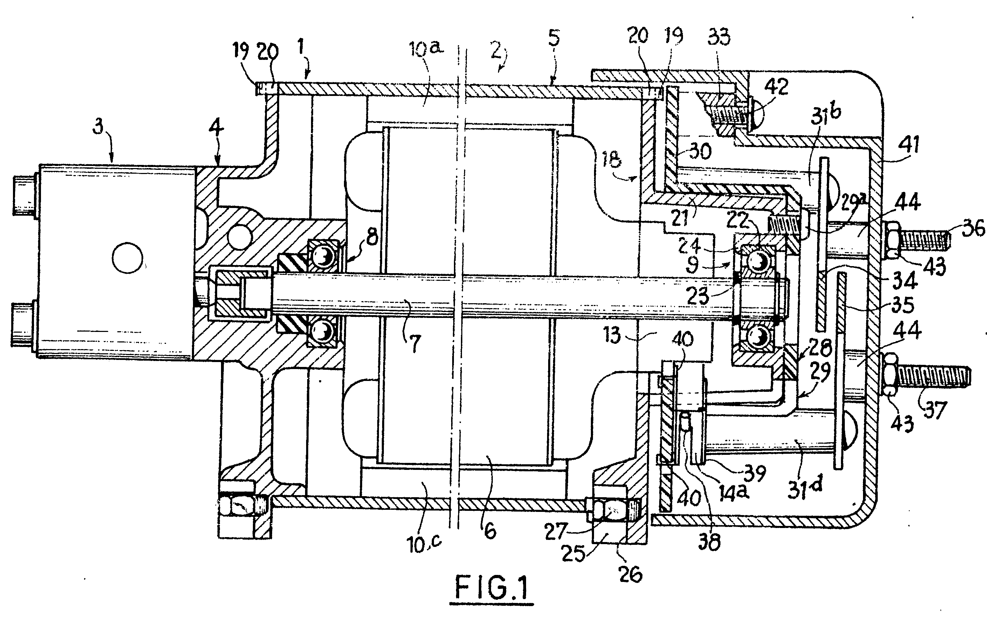

La figure 1 montre une application particulière du moteur électrique suivant l'invention dans un groupe moto-pompe hydraulique 1 destiné à être utilisé dans le dispositif d'assistance de direction d'un véhicule automobile. Bien entendu, l'invention n'est pas limitée à cette application.

Le groupe moto-pompe hydraulique 1 comprend un moteur électrique 2, une pompe à engrenages 3 ainsi qu'une pièce d'assemblage 4 dont les caractéristiques particulières ont été décrites dans la demande de brevet déposée ce jour au nom de la demanderesse pour «Groupe moto-pompe, notamment pour dispositif d'assistance de direction d'un véhicule automobile». Le moteur électrique 2 comporte un stator 5 à carcasse cylindrique de laquelle sont solidaires des aimants permanents (au nombre de quatre dans l'exemple décrit) et formant l'inducteur de ce moteur.

A l'intérieur de la carcasse est monté rotatif un rotor 6 sur un arbre 7 tourillonnant dans des paliers 8 et 9, le palier 8 étant monté dans la pièce d'assemblage 4 comme décrit dans la demande de brevet précitée.

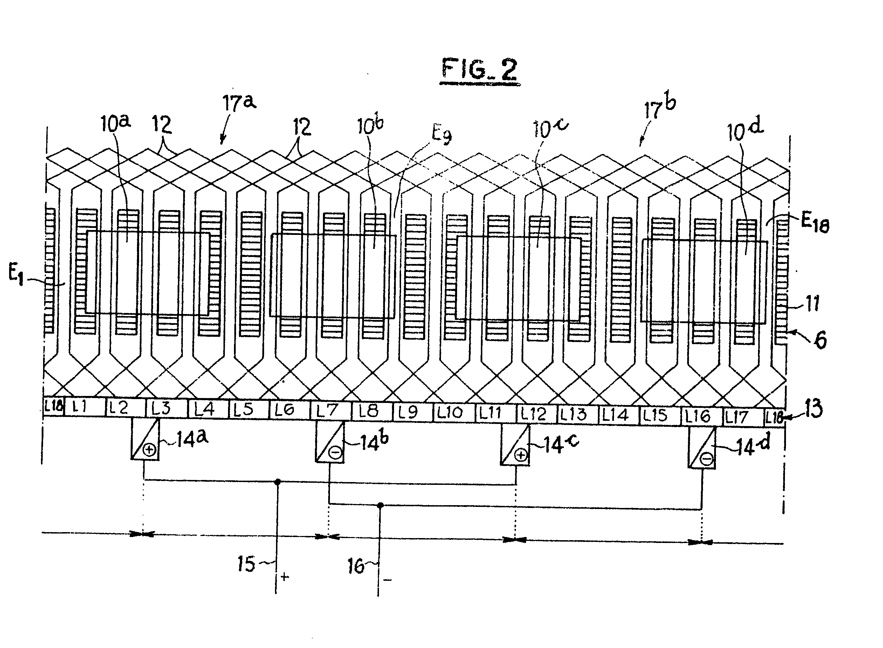

Le schéma de bobinage du rotor 6 apparaît sur la figure 2 que l'on va décrire maintenant.

Dans l'exemple décrit, il s'agit d'un moteur à quatre pôles auxquels sont affectés respectivement quatre aimants permanents 10a à 10d alternativement nord et sud. Le rotor 6 comporte un empilage de tôles 11 dans lequel sont pratiquées dix-huit encoches numérotées de $E_1$ à $E_{18}$ dans lesquelles sont disposées les sections 12 du bobinage. Ces sections sont respectivement connectées à des lames $L_1$ à $L_{18}$ d'un collecteur 13. Quatre balais 14a à 14d sont associés respectivement aux quatre aimants permanents 10a à 10d et sont disposés angulairement de manière à coïncider avec le milieu de l'aimant auquel ils sont associés. Ces balais sont alternativement connectés à la borne positive 15 d'une source d'alimentation et à la borne négative 16 de cette même source, comme cela est indiqué sur la figure. Leur décalage angulaire est de 90° angulaires.

Ainsi le moteur comporte deux paires de pôles symbolisées par les références 17a et 17b, chaque paire de pôles comportant un nombre impair d'encoches ($E_1$ à $E_9$ et $E_{10}$ à $E_{18}$) et également un nombre impair de lames ($L_1$ à $L_9$ et $L_{10}$ à $L_{18}$) du collecteur 13. Par ailleurs, l'agencement est tel que lorsqu'un balai (14b par exemple) se trouve sur une lame de collecteur (lame $L_7$ par exemple), le balai associé (14a) se trouve à cheval sur deux lames (lames $L_2$ et $L_3$) du collecteur, étant entendu que si $1_b$ est la largeur angulaire d'un balai et $1_1$ la largeur angulaire d'une lame du collecteur,

$$\frac{1_1}{2} < 1_b \leqslant 1_1.$$

Le nombre d'encoches représenté sur la figure 2 n'est évidemment choisi qu'à titre d'exemple. Ce nombre peut être de 6, 10, 14, 18, 22 ou davantage, conformément à la formule N = 1/2 S 2n + 1), où n est un nombre entier quelconque et S le nombre de pôles du moteur.

Du fait que les balais 14a à 14b ne commutent pas simultanément le courant dans les différentes sections 12 du bobinage, les phénomènes nuisibles de la commutation sont répartis dans le temps et la modulation du couple fournie par le moteur, présente non seulement une amplitude plus faible, mais également une fréquence plus élevée, de sorte que son influence sur l'arbre 7 du moteur devient beaucoup moins sensible que dans les moteurs classiques.

Il en résulte donc que le débit de sortie de la pompe à engrenages 3 est plus régulier puisque les variations de couple sont nettement moins sensibles, de sorte qu'en définitive, le bruit que peut engendrer le groupe moto-pompe au cours de son fonctionnement est réduit par rapport aux groupes moto-pompe de la technique antérieure.

Un autre résultat obtenu par la disposition particulière des balais 14a à 14d est une moindre usure, puisque les commutations sous deux balais consécutifs sont successives.

Le pas de bobinage p des sections 12 est égal à la distance angulaire entre les pôles (90°) diminuée de la largeur angulaire d'une encoche (bobinage raccourci). Il a résulte une réduction du cuivre utilisé par bobine, ce qui réduit le coût de fabrication du moteur.

On va maintenant décrire plus particulièrement la partie du moteur dans laquelle sont logés les balais (figures 1, 3 et 4).

Du côté opposé à la pompe 3 et à la pièce d'assemblage 4, la carcasse 2 est fermée par un flasque 18 qui est réalisé de préférence en une matière métallique moulée, telle que le Zamac moulé sous pression. Ce flasque est fixé sur la carcasse 4 par l'intermédiaire de sertissages de pattes 19 recourbées sur les parois latérales d'encoches 20 pratiquées, par exemple, en trois endroits angulairement espacés, sur le pourtour du flasque 18. Celui-ci comporte une partie annulaire 21 coaxiale à l'arbre du moteur qui, à son extrémité libre, présente un logement 22 venu de moulage et abritant un roulement 23 dans lequel tourillonne l'arbre 7. Le roulement 23 est retenu dans son logement par l'intermédiaire d'un sertissage annulaire 24 de la matière du flasque 18. Ce dernier comporte également deux semelles de fixation 25 venues de moulage et présentant un logement 26 dans lequel est placé un élément de fixation tel qu'un écrou 27 ou la tête d'une vis (non représentée) retenue dans son logement par un sertissage.

La partie cylindrique 21 du flasque 18 est coiffée par une pièce de montage 28 réalisée en une matière plastique moulée. Cette pièce, qui présente généralement la forme d'un chapeau, comporte une coupelle 29 qui est fixée sur le flasque 18 au moyen de vis 29a, au nombre de trois par exemple, décalées angulairement de 120°.

La pièce de montage 28 comporte également un rebord annulaire 30 d'où s'étendent axialement vers l'extérieur plusieurs pions de montage, à savoir:

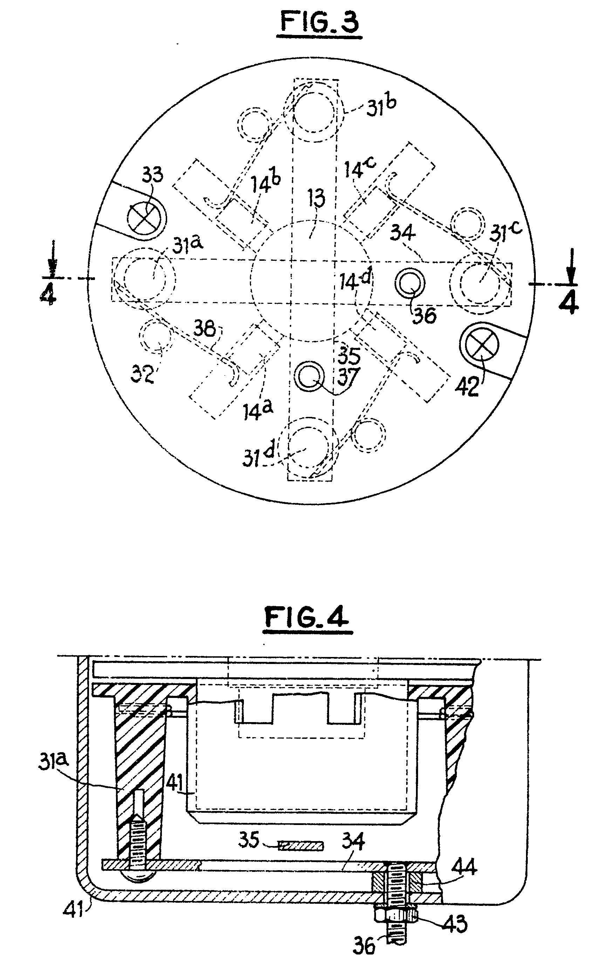

– quatre pions de fixation 31a à 31d (figure 3) qui ont par paire diamétrale une longueur donnée dépassant la hauteur de la coupelle centrale 29;

– quatre pions de fixation 32 de longueur plus faible disposés respectivement près des pions 31a à 31d;

– deux pions de fixation 33 diamétralement opposés de longueur intermédiaire entre celles des pions 32 et 31a à 31d et se trouvant placés à la périphérie du rebord 30.

Une barre de connexion électrique 34, 35 est fixée par vissage à auto-taraudage dans la matière plastique contre les extrémités de deux pions 31a à 31d diamétralement opposés. Du fait de la longueur distincte des pions, ces barres sont situées dans des plans radiaux distincts. Par ailleurs, chacune d'elles est solidaire d'une tige filetée 36, 37 formant borne électrique de connexion du moteur, la tige étant soudée à la barre de connexion correspondante en s'étendant axialement vers l'extérieur.

Les pions 32 sont destinés au montage de ressorts 38 servant respectivement à solliciter les balais 14a à 14d contre le collecteur 13 du moteur. Chaque balai est monté dans une gaine conductrice 39 (figure 1) montée par sertissage en 40 sur le rebord 30 de la pièce de montage 28. Les ressorts s'appuient respectivement sur les pions 31a à 31d associés.

Les pions 33 sont destinés à la fixation d'un capot de protection 41 à l'aide de vis 42 à auto-taraudage, ce capot entourant l'ensemble que l'on vient de décrire et étant également fixé sur les barres de connexion 34 et 35 par l'intermédiaire des tiges filetées 36 et 37 à l'aide d'écrous 43 et d'entretoises 44 (figure 4).

Les balais 14a à 14d sont connectés aux barres 34 et 35 par l'intermédiaire de fils de connexion souples non représentés.

Le montage des balais et des connexions électriques du moteur suivant l'invention sur la carcasse de celui-ci, est donc réalisé par l'intermédiaire d'une seule pièce isolante dont la fabrication est commode et peut coûteuse puisqu'elle est réalisée par simple moulage. L'assemblage des divers éléments peut être fait séparément après quoi l'ensemble peut être rendu solidaire du flasque 18 par simple serrage des vis 29a après quoi le tout est coiffé du capot 41.

**Revendications**

1. Moteur électrique à courant continu et à basse tension destiné notamment à entraîner des accessoires d'un véhicule automobile tels que la pompe hydraulique du dispositif de direction assistée, ce moteur comportant au moins deux pôles (17a, 17b) définis par un stator (5) à aimants permanents (10a à 10d), ainsi qu'un rotor (6) à empilage de tôles (11) muni d'encoches ($E_1$ à $E_{18}$) dans lesquelles sont disposés des bobinages rotoriques (12) à enroulement parallèle qui sont connectés respectivement aux lames ($L_1$ à $L_{18}$) du collecteur (13) du rotor (16), le nombre d'encoches ($E_1$ à $E_9$ et $E_{10}$ à $E_{18}$) du rotor (6) étant égal au nombre de lames ($L_1$ à $L_9$ et $L_{10}$ à $L_{18}$) du collecteur (13) et satisfaisant la relation $N = \frac{1}{2} S (2n + 1)$ dans laquelle N = nombre d'encoches, S = nombre de pôles, n = nombre entier quelconque, la largeur angulaire $1_1$ d'une lame du collecteur (13) étant supérieure ou égale à la largeur angulaire $1_b$ d'un balai (14a, 14c, 14b, 14d), la largeur $1_1$ d'une lame de collecteur et la largeur $1_b$ des balais étant en outre liées par la relation $1_1/2 < 1_b$, cette relation assurant que deux balais (14a, 14c, 14b, 14d) destinés à être branchés respectivement sur les bornes opposées (15, 16) d'une source de tension étant initialement placés de façon que lorsque l'un des balais est sur une lame, l'autre balai chevauche deux lames consécutives, cette position relative des balais et des lames de collecteur étant toujours conservée au cours de la rotation du moteur, les balais (14 à 14d) sont montés sur une pièce unique de montage (28) réalisée en matière isolante et solidaire du flasque (18) du moteur côté collecteur, et cette pièce de montage est agencée également pour supporter des moyens de connexion électrique (34 à 37) de ces balais à une source de courant extérieure.

2. Moteur suivant la revendication 1, caractérisé en ce que ledit flasque (18) comporte une partie centrale cylindrique (21) s'étendant axialement vers l'extérieur autour dudit collecteur (13) et portant à son extrémité extérieure l'un des roulements (23) de l'arbre (7) du moteur, ce rouelement étant maintenu par sertissage (24) dans un logement (22) ménagé dans cette partie centrale cylindrique (21).

3. Moteur suivant les revendications 1 et 2, prises ensemble, caractérisé en ce que ladite pièce de montage (28) présente la forme générale d'un chapeau coiffant la partie centrale cylindrique (21) du flasque (18) et sur le rebord annulaire (30) de laquelle sont prévus plusieurs jeux de pions (31a, à 31d, 32, 33) s'étendant axialement vers l'extérieur et servant au montage desdits moyens de connexion électriques (34 à 37), d'un capot de protection (41) et de ressorts (38) sollicitant les balais (14 à 14d) contre le collecteur (13).

4. Groupe moto-pompe hydraulique, caractérisé en ce qu'il comprend un moteur suivant l'une quelconque des revendications 1 à 3.

**Patentansprüche**

1. Elektrischer Gleichstrommotor niedriger Spannung, insbesondere zum Antrieb der Hilfsaggregate eines Kraftfahrzeuges, beispielsweise der hydraulischen Pumpe der Servolenkung, wobei der Motor wenigstens zwei Pole (17a, 17b), die durch einen Stator (5) mit Dauermagneten (10a bis 10d) definiert sind, sowie einen Rotor (6) mit einem Stapel von Blechen (11) aufweist, die mit Ausschnitten ($E_1$ bis $E_{18}$) versehen sind, in welchen Rotorspulen (12) mit Parallelwicklung angeordnet sind, die jeweils mit dem Lamellen ($L_1$ bis $L_{18}$) des Kollektors bzw. Kommutators (13) des Rotors (16) verbunden sind, wobei die Anzahl von Ausschnitten oder Nuten ($E_1$ bis $E_9$ und $E_{10}$ bis $E_{18}$) des Rotors (6) gleich der Anzahln Lamellen ($L_1$ bis $L_9$ und $L_{10}$ bis $L_{18}$) des Kollektors (13) ist und der Beziehung $N = \frac{1}{2} S (2n + 1)$ genügt, wobei N = Anzahl der Nuten oder Ausschnitte, S = Anzahl der Pole, n = eine beliebige ganze Zahl und die Winkelbreite $1_1$ einer Lamelle des Kollektors (13) grösser oder gleich der Winkelbreite $1_b$ eines Schleifkontaktes bzw. einer Bürste (14a, 14c, 14b, 14d) ist und die Breite $1_1$ einer Kollektor- bzw. Kommutatorlamelle sowie die Breite $1_b$ der Schleifkontakte im übrigen über die Beziehung $1_1/2 < 1_b$ verknüpft sind, wobei diese Beziehung sicherstellt, dass zwei Schleifkontakte (14a, 14c, 14b, 14d), die dazu bestimmt sind, jeweils an die gegenüberliegenden Klemmen (15, 16) einer Spannungsquelle angeschlossen zu werden, zunächst derart angeordnet werden, dass dann, wenn einer der Schleifkontakte sich auf einer Lamelle befindet, der andere Schleifkontakt zwei aufeinanderfolgende Lamellen übergreift, wobei diese relative Lage der Schleifkontakte und der Kollektor- bzw. Kommutatorlamellen immer während der Drehung des Motors beibehalten wird und wobei die Schleifkontakte (14a bis 14d) auf einem einzigen Montagebauteil (28) montiert sind, das aus einem isolierenden Material besteht und fest mit dem Flansch (18) des Motors kollektorseitig bzw. kommutatorseitig ist und wobei dieses Montagebauteil auch so ausgebildet ist, dass es Einrichtungen zur elektrischen Verbindung (34 bis 37) dieser Schleifkontakte mit einer äusseren Stromquelle trägt.

2. Motor nach Anspruch 1, dadurch gekennzeichnet, dass dieser Flansch (18) einen mittigen zylindrischen Teil (21) umfasst, der sich axial nach aussen um diesen Kollektor oder Kommutator (13) herum erstreckt und an seinem äusseren Ende eines der Wälzlager (23) der Welle (7) des Motors trägt, wobei dieses Wälzlager durch Umbördeln (24) in einem Lager (22) gehalten ist, das in diesem mittigen zylindrischen Teil (21) vorgesehen ist.

3. Motor nach den Ansprüchen 1 und 2, dadurch gekennzeichnet, dass dieses Montagebauteil (28) die allgemeine Gestalt eines Hutes aufweist, der den mittigen zylindrischen Teil (21) des Flansches (18) abdeckt und auf dessen Ringrandleistenteil (30) mehrere Sätze von Stehgliedern (31a bis 31d, 32, 33) vorgesehen sind, die sich axial nach aussen erstrecken und zur Montage dieser elektrischen Verbindungseinrichtungen (34 bis 37), einer Schutzkappe (41) und Federn (38) dienen, welche die Schleifkontakte (14a bis 14d) gegen den Kollektor oder Kommutator (13) beaufschlagen.

4. Gruppe aus Motor/hydraulischer Pumpe, gekennzeichnet durch einen Motor nach einem der Ansprüche 1 bis 3.

## Claims

1. A low-voltage dc electric motor, in particular for driving accessories of a motor vehicle such as the hydraulic pump of the assisted steering device, this motor comprising at least two poles (17a, 17b) defined by a stator (5) having permanent magnets (10a to 10d), and a rotor (6) having a stack (11) of sheets provided with notches ($E_1$ to $E_{18}$) in which are disposed rotor coils (12) having a parallel winding which are respectively connected to the bars ($L_1$ to $L_{18}$) of the collector (13) of the rotor (16), the number of notches ($E_1$ to $E_9$ and $E_{10}$ to $E_{18}$) of the rotor (6) being equal to the number of bars ($L_1$ to $L_9$ and $L_{10}$ to $L_{18}$) of the commutator (13) and satisfying the equation $N = \frac{1}{2} S (2n + 1)$ in which $N$ = the number of notches, $S$ = the number of poles, $n$ = any whole number, the angular width $1_1$ of a bar of the commutator (13) being greater than or equal to the angular width $1_b$ of a brush (14a, 14c, 14b, 14d), the width $1_1$ of a commutator bar and the width $1_b$ of the brushers being moreover related by the relation $1_1/2 < 1_b$, this relation ensuring that two brushes (14a, 14c, 14b, 14d) adapted to be respectively connected to the opposite terminals (15, 16) of a source of voltage are initially placed in such manner that when one of the brushes is on one bar, the other brush is astride two consecutive bars, this relative position of the brushes and of the commutator bars always being maintained in the course of the rotation of the motor, the brushes (14 to 14d) are mounted on a single mount element (28) made from an insulating material and connected to the end wall (18) of the motor adjacent to the commutator, and this mount element is also adapted to support electric connecting means (34 to 37) connecting these brushes to an exterior source of courrent.

2. A motor according to claim 1, characterised in that said wall (18) comprises a cylindrical central part (21) which extends axially outwardly around said commutator (13) and carries at its outer end one of the bearings (23) of the shaft (7) of the motor, this bearing being maintained by a setting (24) in a cavity (22) formed in this cylindrical central part (21).

3. A motor according to claims 1 and 2, taken together, characterised in that said mount element (28) has the general shape of a cap capping the cylindrical central part (21) of the end wall (18) and on the annular edge (30) of which are provided a plurality of sets of studs (31a to 31d, 32, 33) axially outwardly extending and serving to mount said electric connecting means (34 to 37), a protective cover (41) and springs (38) biasing the brushes (14a to 14d) against the commutator (13).

4. A hydraulic motor-pump unit, characterised in that it comprise sa motor according to any one of the claims 1 to 3.

FIG.1

0 072 283

# FIG. 2

## FIG.3

## FIG.4